(19) Europäisches Patentamt
European Patent Office
Office européen des brevets

(11) Publication number: **0 112 037**
**B1**

(12) **EUROPEAN PATENT SPECIFICATION**

(45) Date of publication of patent specification: **13.01.88**

(51) Int. Cl.$^4$: **G 02 F 1/17**

(21) Application number: **83306873.7**

(22) Date of filing: **10.11.83**

(54) **A method of driving an electrochromic display device.**

(30) Priority: **26.11.82 JP 207370/82**

(43) Date of publication of application:
**27.06.84 Bulletin 84/26**

(45) Publication of the grant of the patent:
**13.01.88 Bulletin 88/02**

(84) Designated Contracting States:
**CH DE FR GB LI**

(56) References cited:
**EP-A-0 068 635**
**FR-A-2 441 895**
**GB-A-2 069 168**

**JOURNAL OF APPLIED PHYSICS, vol. 53, no. 1, January 1982, pages 804-805, American Institute of Physics, Washington, US K. ITAYA et al.: "Prussian-blue modified electrodes: An application for a stable electrochromic display device"**

(73) Proprietor: **SEIKO INSTRUMENTS INC.**
**31-1, Kameido 6-chome Koto-ku**
**Tokyo 136 (JP)**

(72) Inventor: **Shigeno, Masatsugu**
**c/o Seiko Instruments & Electronics Ltd., 31-1 Kameido 6-chome Koto-ku, Tokyo (JP)**
Inventor: **Sakuhara, Toshihiko**
**c/o Seiko Instruments & Electronics Ltd., 31-1 Kameido 6-chome Koto-ku Tokyo (JP)**

(74) Representative: **Caro, William Egerton et al**
**J. MILLER & CO. Lincoln House 296-302 High Holborn**
**London WC1V 7JH (GB)**

(56) References cited:
**JOURNAL OF THE ELECTROCHEMICAL SOCIETY, vol. 130, no. 1, January 1983, pages 249-251, Manchester, New Hampshire, US D.W. DeBERRY et al.: "Photoelectrochromic behavior of prussian blue-modified TiO2 electrodes"**

**EP 0 112 037 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to electrochromic display devices and methods of driving same.

Electrochromic display devices are known from the prior art, which comprise an electrolyte in contact with a display electrochromic electrode and a counter electrode. In particular, the document J. Appl. Phys. 52 (1982), pages 804—805 discloses such a device in which both the display and counter electrodes are coated with Prussian blue. There is also a reference to another material exhibiting electrochromism, tungsten oxide ($WO_3$) which in EP—A—0068635 is described as commercially unacceptable.

It is known to drive such display devices by applying appropriate voltages between the display and counter electrodes, but with an additional electrode as a reference electrode to which the voltages are measured. Such a three-electrode system is complicated and expensive, and cannot easily be reduced in size to be usable in a wristwatch, for example.

According to the invention, therefore, an electrochromic display device comprising an electrolyte in contact with a display electrode coated with a film of Prussian blue and with a counter electrode spaced from the display electrode, is characterised in that the device is a two-electrode device and that the counter electrode is coated with a film of $WO_3$.

From another aspect, the invention comprises a method of driving an electrochromic display device comprising an electrolyte in contact with a display electrode coated with a film of Prussian blue and with a counter electrode spaced from the display electrode, characterised in that the device is a two-electrode device, that the counter electrode is coated with a film of $WO_3$, and that the method comprises the steps of applying a voltage greater than +0.3 volts to the display electrode with respect to the counter electrode in order to place the display electrode in a dark display state, and applying a voltage less than +0.2 volts to the display electrode with respect to the counter electrode in order to place the display electrode in a light display state.

The invention is illustrated, merely by way of example, in the accompanying drawings, in which:—

Figure 1 is a cyclic voltammogram of a Prussian blue thin film;

Figure 2 is a sectional view of one embodiment of an electrochromic display device according to the invention;

Figure 3 shows a waveform of a drive signal which is used for driving the electrochromic display device of Figure 2 by one method according to the present invention; and

Figure 4 is a sectional view of another embodiment of an electrochromic display device according to the invention.

Various methods according to the present invention for driving electrochromic display devices will be explained with reference to the drawings. Prussian blue changes from a coloured state to a bleached or clear state in accordance with the following electrochemical reaction:

$$KF_e(III)F_e(II)(CN)_6+K^++e^- \rightleftharpoons K_2F_e(II)F_e(II)(CN)_6$$

(blue colour) (clear colour)

In the above reaction the substance on the left hand side exhibits blue colour and the substance on the right hand side is colourless. The electrochemical reaction is a reversible oxidation-reduction reaction. In a three electrode electrochromic display device having a Prussian blue coated display electrode, a counter electrode and a saturated calomel electrode (SCE) as a reference electrode, the Prussian blue coated display electrode becomes coloured when at about +0.6V with respect zo the reference electrode and it becomes bleached at about −0.2V. Figure 1 is a cyclic voltammogram of a Prussian blue film of a display electrode in a three electrode electrochromic display device, and three electrodes being in contact with a 1MKC1 electrolyte solution. The cyclic voltammogram has a peak at about +0.2V and indicates that the Prussian blue coated display electrode completes colouration at about +0.6V and completes bleaching at about −0.2V.

According to the invention, an electrochromic display device has a Prussian blue coated display electrode and a tungsten oxide coated counter electrode, and the reference electrode is rendered unnecessary.

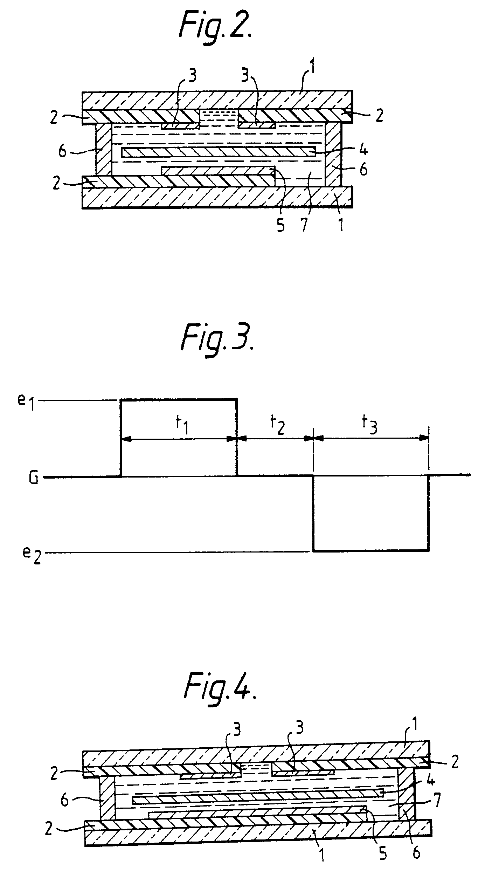

Figure 2 shows one embodiment of an electrochromic display device according to the invention. The display device has a pair of glass substrates 1 on each of which there is a transparent conductive film 2, a Prussian blue coated display electrode 3, a reflective plate 4, a counter electrode 5 coated with a film of tungsten oxide ($WO_3$), a spacer 6 and an electrolyte 7. The display electrode 3 is provided on the transparent conductive film 2 on one of the glass substrates 1. The counter electrode 5 is provided on the transparent conductive film 2 on the other glass substrate 1. The reflective plate 4 is provided in the space between the glass substrates 1 and the spacer 6 is sandwiched therebetween. The remainder of the space is filled with the electrolyte 7.

A Prussian blue film is prepared as disclosed in JP—A—57194278. A 0.02 molar aqueous solution of $Fe(ClO_4)_3$ whose pH is regulated to pH2 by $HClO_4$ and a 0.02 molar aqueous solution of $Fe(CN)_6$ are mixed together in a volume ratio of 1:1 to form an electrolytic solution. A display electrode which is to be coated with Prussian blue and a counter electrode for the electrolytic process are immersed in the electrolytic solution. An electric current having a density of 10 $\mu A/cm^2$ is applied to the display electrode to deposit a

Prussian blue film thereon. The electric charge density of the display electrode is arranged to be about 9 $mC/cm^2$. The display electrode 3 is formed in this manner.

As seen from the cyclic voltammogram of Figure 1 in order to bleach a Prussian blue film a voltage $V_2$ less than +0.2V for instance −0.2V with respect to a reference electrode should be applied thereto. In order to colour the Prussian blue film a voltage $V_1$ of more than +0.2V for instance +0.7V with respect to the reference electrode should be applied thereto. In a method according to the present invention of driving the two electrode electrochromic display device of Figure 2 the voltage applied to the Prussian blue coated display electrode 3 is determined with respect to the electric potential E of the counter electrode 5. Namely, in order to set the potential level of the display electrode 3 at $V_1$, a voltage $(V_1-E)=+0.5$ volts should be applied to the display electrode 3 with respect to the counter electrode 5. In order to set the potential level of the display electrode 3 at $V_2$, a voltage $(V_2-E)=0.4$ volts should be applied to the display electrode with respect to the counter electrode 5. Figure 3 shows the waveform of a drive signal applied to the electrochromic display device of Figure 2 where voltage level $e_1$ is +0.5 volts, voltage level $e_2$ is −0.4 volts, voltage level G is 0.0 volts, time interval $t_1$ is 1.5 seconds, time interval $t_2$ is 1.0 second and time interval $t_3$ is 1.5 seconds. Initially +0.5 volts is applied to the display electrode for 1.5 seconds, no voltage is applied for the next 1.0 second and −0.4 volts is applied for the next 1.5 seconds. During the time interval $t_1$, the potential level of the display electrode is kept at voltage $V_1$ and during the time interval $t_3$, the potential level of the display electrode is kept at the voltage $V_2$.

Figure 4 is a sectional view of another embodiment of an electrochromic display device having a pair of glass substrates 1, a transparent conductive film 2, a Prussian blue coated display electrode 3, a reflective plate 4, a counter electrode 5 coated with a film of tungsten oxide ($WO_3$), a spacer 6 and an electrolyte 7. The display electrode 3 is provided on the transparent conductive film 2 on one of the glass substrates 1. The counter electrode 5 is provided on the transparent conductive film 2 on the other glass substrate 1. The space between the pair of glass substrates 1 and the spacer 6 contains the electrolyte 7 and the reflective plate 4.

A method of driving the electrochromic display device of Figure 6 will now be explained. The electrode potential of the Prussian blue coated electrode material in the coloured state is the voltage $V_1=+0.6$ volts and the electrode potential of the Prussian blue coated electrode material in the bleached state is the voltage $V_2=-0.2$ volts. In the previous embodiment, the counter electrode potential E is stable and does not vary. However, depending upon the method of driving the electrochromic display device, in some cases the counter electrode potential E can vary. In the electrochromic display device of Figure 4, the maximum potential $E_1$ of the counter electrode which enables tungsten oxide to undergo a reversible electrochemical reaction is +0.3 volts. The minimum counter electrode potential $E_2$ which enables tungsten oxide to undergo a reversible electrochemical reaction is −0.4 volts. Consequently, in order to render the display electrode 3 coloured a voltage more than $(V_1-E_1)=+0.3$ volts is applied to the display electrode with respect to the counter electrode 5. In order to render the display electrode colourless, a voltage less than $(V_2-E_2)=+0.2$ volts should be applied to the display electrode with respect to the counter electrode. In this embodiment +0.8 volts, which is greater than $(V_1-E_1)=+0.3$ volts is applied to the display electrode so as to render it coloured and −0.1 volts which is less than $(V_2-E_2)=+0.2$ volts is applied to the display electrode so as to render it colourless.

## Claims

1. An electrochromic display device comprising an electrolyte (7) in contact with a display electrode (3) coated with a film of Prussian blue and with a counter electrode (5) spaced from the display electrode, characterised in that the device is a two-electrode device and that the counter electrode is coated with a film of $WO_3$.

2. A device as claimed in Claim 1, including first means for applying a voltage greater than +0.3 volts to the display electrode with respect to the counter electrode so as to cause the display electrode to exhibit a dark display state, and second means for applying a voltage less than +0.2 volts to the display electrode with respect to the counter electrode so as to cause the display electrode to exhibit a light display state.

3. A device as claimed in Claim 1 or 2, in which the film of Prussian blue is electrolytically synthesized.

4. A method of driving an electrochromic display device comprising an electrolyte (7) in contact with an electrochromic display electrode (3) coated with a film of Prussian blue and with a counter electrode (5) spaced from the display electrode, characterised in that the device is a two-electrode device, that the counter electrode is coated with a film of $WO_3$, and that the method comprises the steps of applying a voltage greater than +0.3 volts to the display electrode with respect to the counter electrode in order to place the display electrode in a dark display state, and applying a voltage less than +0.2 volts to the display electrode with respect to the counter electrode in order to place the display electrode in a light display state.

## Patentansprüche

1. Elektrochrome Anzeigevorrichtung mit einem Elektrolyten (7), der mit einer Anzeigeelektrode (3), die mit einem Film aus Preußisch Blau überzogen ist, und mit einer Gegenelektrode (5) im Abstand von der

Anzeigeelektrode in Kontakt steht, dadurch gekennzeichnet, daß die Vorrichtung eine Zweielektrodenvorrichtung ist und daß die Gegenelektrode mit einem Film aus $WO_3$ überzogen ist.

2. Vorrichtung nach Anspruch 1, welche eine erste Einrichtung zum Anlegen einer Spannung von mehr als +0,3 Volt an die Anzeigeelektrode bezüglich der Gegenelektrode, um zu bewirken, daß die Anzeigeelektrode einen dunklen Anzeigezustand zeigt, und eine zweite Einrichtung zum Anlegen einer Spannung von weniger als +0,2 Volt an die Anzeigeelektrode bezüglich der Gegenelektrode, um zu bewirken, daß die Enzeigeelektrode einen hellen Anzeigezustand zeigt, aufweist.

3. Vorrichtung nach Anspruch 1 oder 2, bei der der Film aus Preußisch Blau elektrolytisch synthetisiert ist.

4. Verfahren zum Betreiben einer elektrochromen Anzeigevorrichtung mit einem Elektrolyten (7), der mit einer elektrochromen Anzeigeelektrode (3), die mit einem Film aus Preußisch Blau überzogen ist, und mit einer Gegenelektrode (5) im Abstand von der Anzeigeelektrode in Kontakt steht, dadurch gekennzeichnet, daß die Vorrichtung eine Zweielektrodenvorrichtung ist, daß die Gegenelektrode mit einem Film aus $WO_3$ überzogen ist und daß das Verfahren die Schritte des Anlegens einer Spannung von mehr als +0,3 Volt an die Anzeigeelektrode bezüglich der Gegenelektrode, um die Anzeigeelektrode in einen dunklen Anzeigezustand zu bringen, und des Anlegens einer Spannung von weniger als +0,2 Volt an die Anzeigeelektrode bezüglich der Gegenelektrode, um die Anzeigeelektrode in einen hellen Anzeigezustand zu bringen, umfaßt.

**Revendications**

1. Dispositif d'affichage électrochromique comportant un électrolyte (7) en contact avec une électrode d'afficharge (3) revêtue d'une pellicule de bleu de Prusse et avec une contre-électrode (5) espacée de l'électrode d'affichage, caractérisé en ce que le dispositif est un dispositif à deuax électrodes et en ce que la contre-électrode est revêtue d'une pellicule de $WO_3$.

2. Dispositif selon la revendication 1, comportant un premier dispositif qui applique une tension supérieure à +0,3 volt à l'électrode d'affichage par rapport à la contre-électrode de manière que l'électrode d'affichage présente un état d'affichage sombre et un second dispositif qui applique une tension inférieure à +0,2 volt à l'électrode d'affichage par rapport à la contre-électrode pour que l'électrode d'affichage présente un état d'affichage clair.

3. Dispositif selon la revendication 1 ou 2, dans lequel la pellicule de bleu de Prusse est formée par synthèse électrolytique.

4. Procédé d'attaque d'undispositif d'affichage électrochromique comportant un électrolyte (7) en contact avec un électrode d'affichage électrochromique (3) revêtue d'une pellicule de bleu de Prusse et avec une contre-électrode (5) espacée de l'électrode d'affichage, caractérisé en ce que le dispositif est un dispositif à deux électrodes, en ce que la contre-électrode est revêtue d'une pellicule de $WO_3$ et en ce que le procédé consiste à appliquer une tension supérieure à +0,3 volt à l'électrode d'affichage par rapport à la contre-électrode pour placer l'électrode d'affichage dans un état d'affichage sombre et à appliquer une tension inférieure à +0,2 volt à l'électrode d'affichage par rapport à la contre-électrode pour placer l'électrode d'affichage dans un état d'affichage clair.

Fig.1.

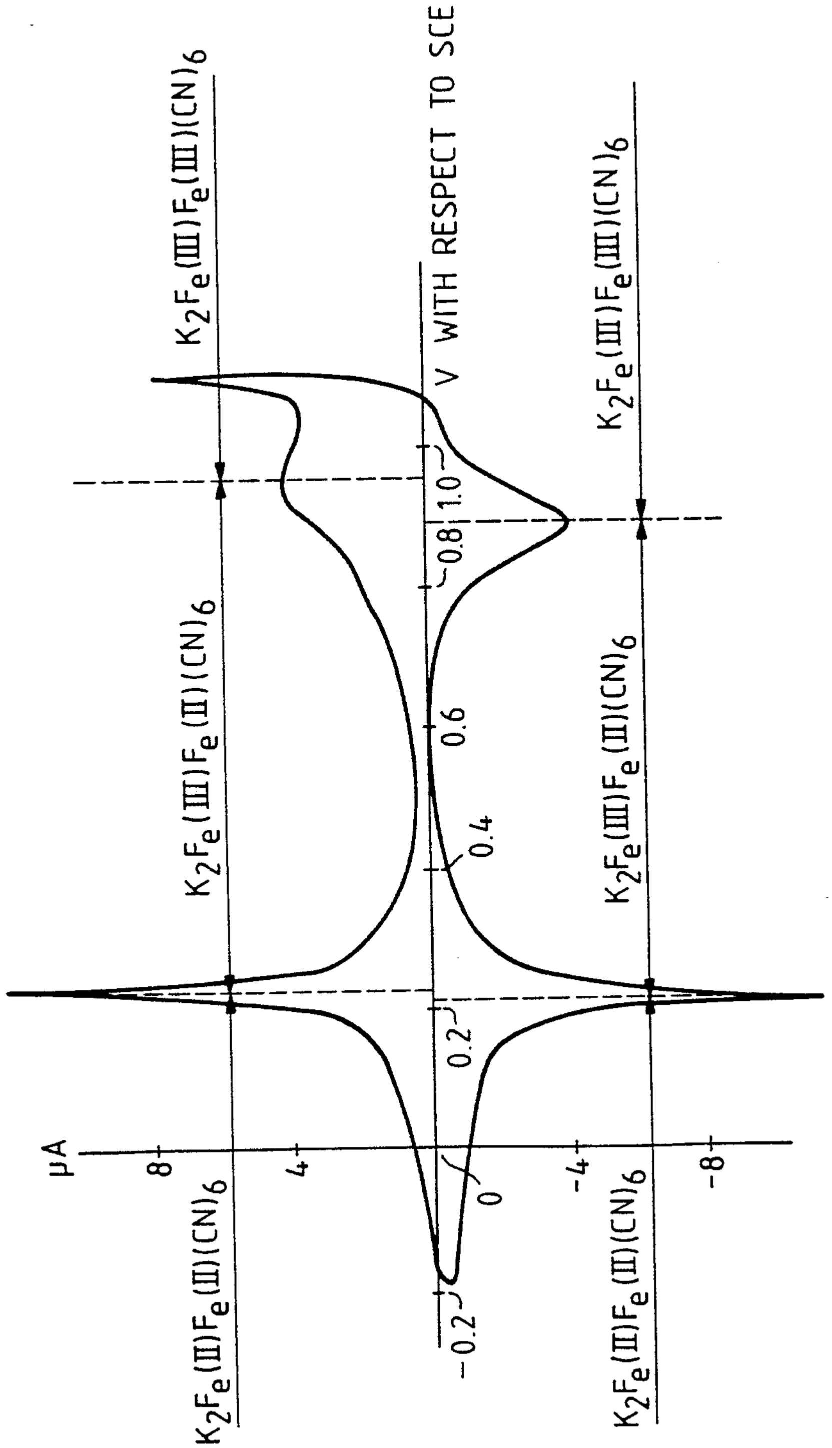
$K_2F_e(III)F_e(III)(CN)_6$
$K_2F_e(III)F_e(II)(CN)_6$
$K_2F_e(II)F_e(II)(CN)_6$
V WITH RESPECT TO SCE
μA
8
4
0
-4
-8
-0.2
0.2
0.4
0.6
0.8
1.0
$K_2F_e(III)F_e(III)(CN)_6$
$K_2F_e(III)F_e(II)(CN)_6$
$K_2F_e(II)F_e(II)(CN)_6$

Fig. 2.

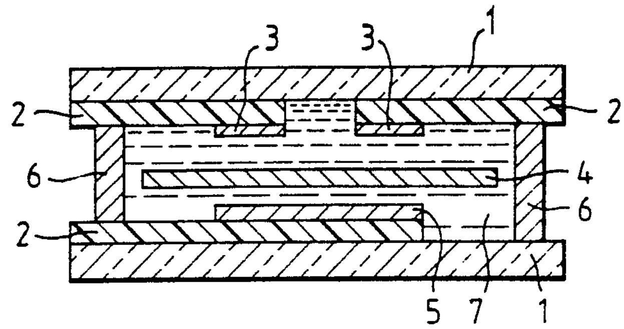


Fig. 3.

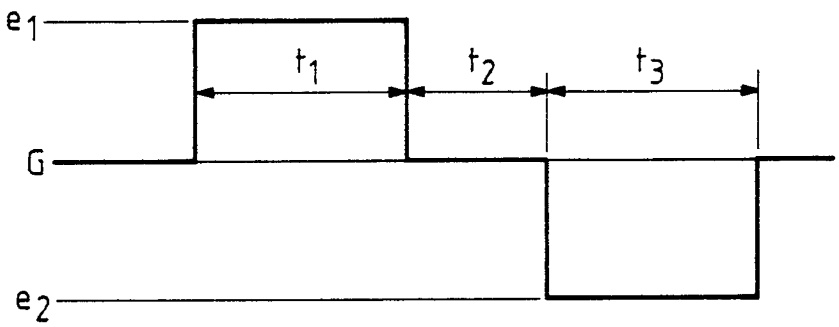


Fig. 4.